**Europäisches Patentamt**

**European Patent Office**

**Office européen des brevets**

(11) Publication number: **0 009 389**
**B1**

# EUROPEAN PATENT SPECIFICATION

(45) Date of publication of patent specification: **30.06.82**

(51) Int. Cl.³: **F 16 G 5/08**

(21) Application number: **79301919.1**

(22) Date of filing: **18.09.79**

(54) **Endless power transmission belt.**

(30) Priority: **19.09.78 JP 129165/78 U**

(43) Date of publication of application:
**02.04.80 Bulletin 80/7**

(45) Publication of the grant of the patent:
**30.06.82 Bulletin 82/26**

(84) Designated Contracting States:
**CH DE FR GB IT NL SE**

(56) References cited:
**US - A - 3 564 933**
**US - A - 3 820 409**
**US - A - 3 853 017**
**US - A - 4 011 766**
**US - A - 4 127 039**

**GUMMI, ASBEST UND KUNSTSTOFFE Vol. 27, No. 7, July 1974, Dipl.-Ing. W. LUERS, pages 503—506, 508 "Triebriemen und ihre Herstellung"**

(73) Proprietor: **MITSUBOSHI BELTING LTD.**
**No. 1-21, Hamazoedori 4-Chome Nagata-ku Kobe-shi Hyogo (JP)**

(72) Inventor: **Imamura, Junji**
**No. 501-20, Minbudani Shioya-cho Tarumi-ku Kobe-shi Hyogo (JP)**

(74) Representative: **Cooper, Derek Robert et al, MARKS & Clerk Alpha Tower ATV Centre Birmingham B1 1TT (GB)**

Courier Press, Leamington Spa, England.

## Endless power transmission belt

This invention relates to an endless power transmission belt of the type comprising a plurality of V-belt components spaced apart laterally of the direction of extent of the belt and a tie band connecting the V-belt components together to form a unitary structure. Such an endless belt is particularly suited to operation under heavy loads, such as in transmitting high torques from a pulley mounted on a rotatable driving shaft to a further pulley mounted on a rotatable driven shaft.

Multi-belt drive systems are known in which a plurality of individual V-belts are placed around driving and driven pulleys, the belts locating in respective grooves in each of the pulleys. These V-belts are, however, liable to be of different lengths resulting in the belts being subjected to different loads. The service life of those belts which are subjected to high loads is thus shortened. Furthermore, when the drive system is used in a machine such as a crusher or a compressor having a great impact force, the V-belts vibrate and come into contact with each other, which can result in one of more of the belts turning over or running off the pulleys.

In order to overcome these difficulties, an endless power transmission belt of the above-described type is proposed in U.S. Patent No. 3,404,577 (Zahn). In this endless belt, a plurality of nylon cords are embedded in an elastomer tie band so as to extend substantially perpendicularly to the direction of extent of the belt, giving the belt excellent flexibility in its direction of extent. Where the belt is used with small diameter pulleys, however, the elastomeric material of the tie band between the nylon cords is repeatedly and excessively elongated longitudinally of the belt, and is therefore liable to become cracked. Moreover, since the nylon cords extend across the belt, the belt is rigid in the widthwise direction but is low in stretchability. Therefore, the belt cannot sufficiently follow motions in the widthwise direction.

U.S. Patent No. 3,564,933 (Clinkenbeard) discloses an endless power transmission belt in which the tie band is formed by embedding wide angle cloth in an elastomeric material. More particularly, the tie band includes one or more layers of such cloth, each layer including cords which are mutually inclined (for example at angles of 90°, 95° and 155°) and also inclined with respect to the direction of extent of the belt. Although this form of belt is relatively high in stretchability in both the lengthwise and widthwise directions, it still suffers from the following disadvantages. When the belt is bent over a small diameter pulley, both the tie band and the wide angle cloth become considerably elongated in the longitudinal direction. This causes the interwoven warps and wefts of the wide angle

cloth to rub against each other, resulting in abrasion of and possibly damage to the warps and wefts. Furthermore, the warps and wefts are extended in a wavy state during weaving, giving the wide angle cloth less rigidity than might be expected widthwise of the belt. This causes the V-belt components to drop in the pulley grooves, resulting in a comparatively short service life for the belt.

It is an object of the present invention to provide an endless power transmission belt of the above-described type which has improved flexibility, side-pressure durability and crack resistance, and which therefore has a longer service life than existing endless belts of this type. To this end, the present invention provides an endless belt of the above-described type a tie band which is composed of a plurality of cord fabric layers disposed one on top of another with each adjacent pair of layers having a layer of elastomeric material interposed therebetween, the cord fabric layers including cords which are mutually inclined at an angle of between 95° and 155° and which are also inclined with respect to the direction of extent of the belt. However, unlike the belt disclosed in U.S. Patent No. 3,564,933, in each cord fabric layer of the belt of the present invention, all of the cords are parallel and have a single orientation only.

It is to be noted that U.S. Patent No. 3,820,409 (Meadows) discloses a V-belt construction comprising a supporting structure of two layers of parallel cords, the cords in each layer all having the same orientation and the angle between the two sets of cords lying preferably in the range between 90° and 160°. However, the function of these cords is not directly comparable to those in the present invention, and in any case they are not provided in a tie band as described above.

The endless power transmission belt of the invention has the following significant merits. The cords of adjacent cord fabric layers although mutually inclined are separated by an interposed elastomer layer, and therefore will not be subject to abrasion as in the belt disclosed in the above-mentioned U.S. Patent No. 3,564,933. The cords of each cord fabric layer are moreover embedded in elastomeric material, which serves as a cushion for the cord fabric layer when it is bent: therefore, there is little tendency for the tie band to become cracked and the belt can thus maintain its flexibility for a protracted period of time. Accordingly, the endless power transmission belt of the invention is not prone to vibration, turning over or running off the pulleys on which it is mounted in use. Furthermore, the belt has an increased service life and an improved power transmission performance.

Embodiments of the present invention will now be described, by way of example, with reference to the accompanying drawings, in which:—

Figure 1 is a perspective view, partly cut away, of a section of an endless power transmission belt according to one embodiment of the present invention;

Figure 2 is a similar view to Figure 1 but of an endless power transmission belt according to a second embodiment of the present invention;

Figure 3 is a perspective view of the belt shown in Figure 1 or Figure 2 when mounted on driving and driven pulleys of a power transmission system; and

Figure 4 is a cross-sectional view of the belt shown in Figure 2 where it engages one of the pulleys.

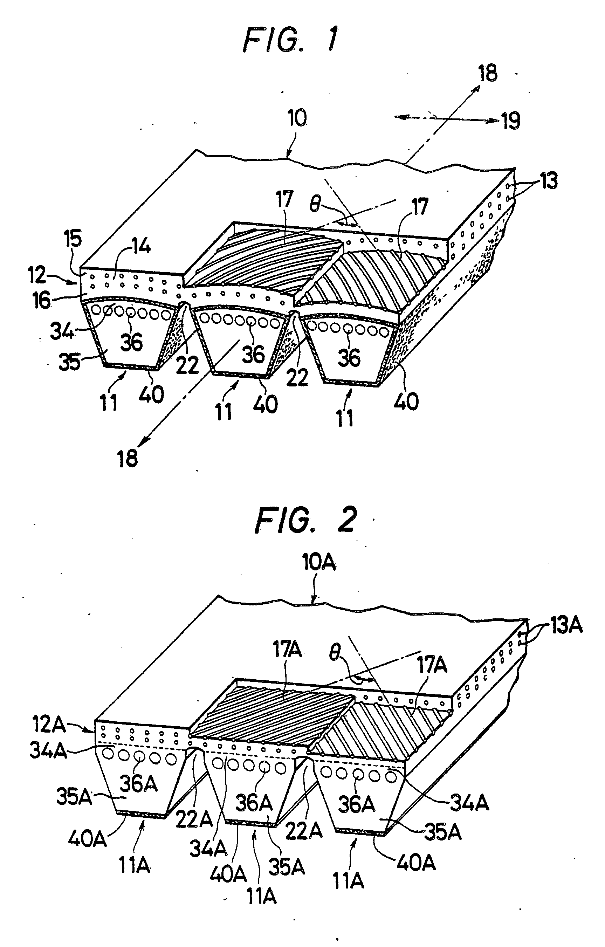

Referring first to Figure 1, the endless power transmission belt shown therein is referenced generally as 10 and comprises a plurality of V-belt components 11 spaced apart laterally of the direction of extent or longitudinal axis 18 of the belt 10 and a tie band 12 connecting the V-belt components together to form a unitary structure. The tie band 12 is composed of two layers 13 of cord fabric having a layer 14 of elastomeric material interposed therebetween, each of the cord fabric layers 13 comprising parallel cords 17 embedded in elastomeric material 15, 16. The elastomeric material in which the cords 17 are embedded is preferably the same as that from which the layer 14 is made, and can for example be natural rubber (NR), styrene butadiene rubber (SBR), polychloroprene rubber (CR), nitrile butadiene rubber (NBR) or blends thereof.

The cords 17 in each cord fabric layer 13 are inclined relative to the longitudinal axis 18 of the belt, such that the cords in one layer form an angle $\theta$ of from 95° to 155° with the cords of the other layer 13, this angle being obtuse with respect to the longitudinal axis 18. This arrangement gives the tie band 12 good stretchability in both the lengthwise direction 18 and the widthwise direction 19 of the belt. It is preferred that the longitudinal axis 18 bisects the angle $\theta$ such that the cords 17 in the two layers 13 subtend equal but opposite angles to the axis: however, the function of the tie band 12 is not unduly affected if this requirement is not met.

The cords 17 are made of twisted fibres which are low in elongation and high in strength. Suitable examples of such fibres are those made of polyester, polyamide, rayon or cotton, the best results being obtained when polyester or polyamide fibres are used. Each cord fabric layer 13 is treated with an adhesive in a well-known manner to ensure good bonding of the cords to the elastomeric material in which they are embedded.

Although the tie band 12 is shown as including two cord fabric layers 13, additional cord fabric layers can be provided adjacent to or remote from these. In such a case, it is preferred that an even number of additional fabric layers is provided, although an odd number could also be used. However, in all cases the cords of each additional layer should be inclined to the longitudinal axis of the belt, and the cords in each adjacent pair of cord fabric layers should be mutually inclined at the above-mentioned angle $\theta$. In addition, a layer of elastomeric material similar to the layer 14 should be interposed between each adjacent pair of fabric cord layers.

Each V-belt component 11 is trapezoidal in cross-section and comprises a tension section 34, a compression section 35 and a neutral axis section 36 disposed between the tension and compression sections, the section 36 being formed by a helically wound continuous cord. The entire external surface of each V-belt component 11 is covered by a cloth covering 40, the tie band 12 being bonded to portions of the cloth covering which cover the tension section 34. The cloth covering 40 is a woven fabric which is stretchable longitudinally of the belt, a bias cloth known in the art being most suitable. The covering 40 is firmly bonded to the V-belt components by treating it with an adhesive: however, depending on the material from which it is made, the covering 40 can be bonded to the V-belt components using a bonding rubber without treatment with an adhesive.

When the belt is required to have high lateral rigidity for certain applications, the tension section 34 and/or the compression section 35 of each V-belt component 11 can be made in the form of a matrix rubber layer in which short fibres extending transversely of the belt are embedded. These fibres can be made of cotton, rayon, polyamide or polyester, for example.

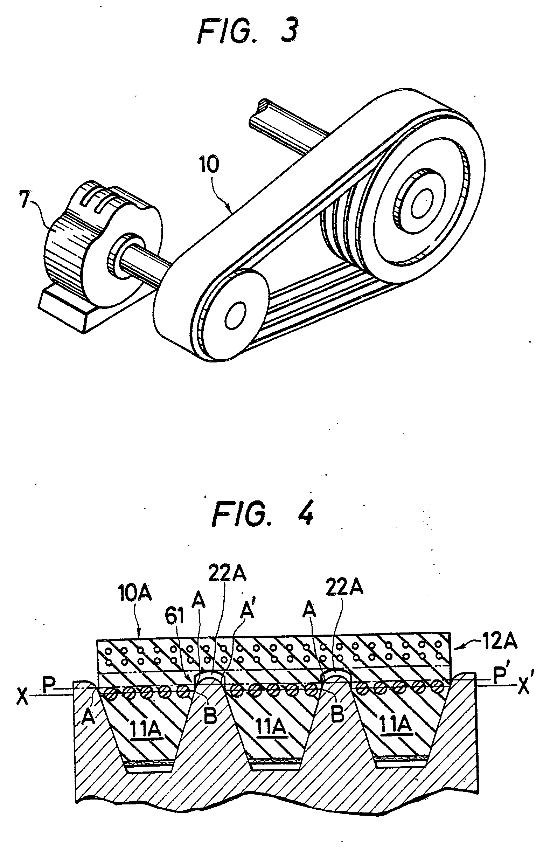

As shown in Figure 3, the belt 10 is laid over a driving pulley and a driven pulley of a power transmission system. The rotation of a motor 7 is transmitted to the driving pulley by way of a drive shaft, the belt 10 then transmitting the rotation of the driving pulley to the driven pulley. The V-belt components of the belt locate in respective grooves in the pulleys, the non-parallel side walls of the V-belt components being brought into close contact with the side walls of the pulley grooves to effect power transmission between the belt and the pulley.

Referring back to Figure 1, a groove 22 is formed in the tie band 12 between each adjacent pair of V-belt components 11, and forms an air gap for the reception with clearance of a portion of the outer periphery of the pulley. Each groove 23 is of inverted U cross-section and extends continuously in the longitudinal direction of the belt, and its sides are continued to the confronting walls of the V-belt components between which it is disposed. During operation of the belt, portions of the V-belt components which contact the pulley become worn, resulting in the belt dropping in the pulley grooves. Due to the presence of the air gap 22, however, the tie band 12 is prevented from coming into contact with the outer periphery of the pulley. The V-belt components 11 thus provide an effective wedge effect.

The endless power transmission belt shown in Figure 2 is generally similar to that described above with reference to Figure 1, and accordingly similar parts are denoted by the same reference numerals but with the suffix "A". However, whereas the belt shown in Figure 1 is of the so-called wrapped type wherein each V-belt component 11 is covered in its entirety by the cloth covering 40, the belt 10A of Figure 2 is of the so-called raw edge type in which only surfaces of the V-belt components 11A which form a radially inner surface of the belt in use are provided with a cloth covering 40A. The tie band 12A is now bonded directly to the tension section 34A of each V-belt component 11A.

As in the embodiment of Figure 1, the belt 10A is provided with an air gap 22A between each adjacent pair of V-belt components 11A. In this embodiment, however, the air gap is not formed by a groove in the tie band, but is instead constructed by folding the sides of the tension section 34A of the V-belt components vertically to form opposed vertical walls. Referring to Figure 4, these vertical walls are spaced apart by at least the width (between points A and A') of the arc formed by the outer periphery of the pulley.

Still referring to Figure 4, a line XX' laterally connecting the centres of the cords which form the neutral axis section 36A of the V-belt components is positioned radially inwardly of a lateral line P—P' of contact between the V-belt components and the side walls of the pulley grooves. This has an important effect in increasing the power transmission performance of the belt. Because the elastomeric material of the compression sections 35A of the V-belt components 11A is exposed to driving engagement with the side walls of the pulley grooves, the coefficient of friction between the belt 10A and the pulley is higher than that for the belt 10 shown in Figure 1, and therefore the belt 10A has a greater power transmission capability than the belt 10.

The V-belt components 11A of the belt 10A may be formed as the so-called cog type in which a plurality of grooves are formed in the surface of each V-belt component which forms a radially inner surface of the belt in use, the grooves extending transversely of the belt. This gives the belt great longitudinal flexibility, making it most suitable for use on small diameter pulleys. The configuration, dimensions and longitudinal pitch of these grooves can be chosen according to conventional techniques.

The above-described power transmission belts according to the present invention have the following particular advantages. In cases where the dimensions of the pulley grooves are not suitable or the belt becomes excessively worn after a long period of use, the belt may become elongated in the widthwise direction. In particular, the portions of the tie band between adjacent V-belt components are especially susceptible to elongation. However, because at least two layers of cord fabric are provided in the tie band, the tendency to such elongation is eliminated and the belt can be operated satisfactorily without being affected by the V-belt components.

Where the belt is mounted on a small diameter pulley, the tie band is repeatedly subjected to longitudinal elongation. This does not, however, cause wearing of the cords in the cord fabric layers and consequential damage of the belt because adjacent cord fabric layers are not in direct contact, being instead separated from one another by the interposed elastomer layer.

The cords in each cord fabric layer are inclined not only with respect to the longitudinal axis of the belt but also with respect to the cords in the adjacent cord fabric layer or layers. When the belt is elongated longitudinally, consequential elongation of the elastomer layer between each pair of adjacent cord fabric layers is suppressed by the cords in those layers. Therefore, the interposed elastomer layer is protected against excessive elongation, and by this mutual action the elastomer layer is prevented from becoming cracked: consequently, the service life of the belt is lengthened.

In the above-described embodiments, the belt is provided with three V-belt components 11 or 11A. It is to be appreciated however that a different number of V-belt components can be used, such as two, four or more.

**Claims**

1. An endless power transmission belt comprising a plurality of V-belt components spaced apart laterally of the direction of extent of the belt and a tie band connecting the V-belt components together to form a unitary structure, the tie band being composed of a plurality of cord fabric layers disposed one on top of another with each adjacent pair of layers having a layer of elastomeric material interposed therebetween, the cord fabric layers including cords which are mutually inclined at an angle of between 95° and 155° and which are also inclined with respect to the direction of extent of the belt, characterised in that in each cord fabric layer (13) all of the cords (17) are parallel and have a single orientation only.

2. An endless belt according to Claim 1, wherein each V-belt component (11) is generally trapezoidal in cross-section and comprises a tension section (34), a compression section (35) and a neutral axis section (36) interposed between the tension and compression sections, the V-belt components being bonded to the tie band (12) through the tension sections (34) thereof.

3. An endless belt according to Claim 2, wherein the entire external surface of each V-belt component (11) is covered by a cloth covering (40), and the tie band (12) is bonded to portions of the cloth covering (40) which cover the tension sections (34) of the V-belt components (11).

4. An endless belt according to Claim 2, wherein each V-belt component (11A) is of the raw edge type having a cloth covering (40A) only on a surface thereof which forms a radially inner surface of the belt in use, and the tie band (12A) is bonded directly to the tension sections (34A) of the V-belt components (11A).

5. An endless belt according to any one of Claims 2, 3 or 4, wherein each V-belt component (11) is of the cog type having a series of grooves in its compression section (35) which extend across the belt transversely of its direction of extent.

6. An endless belt according to any one of Claims 2 to 5, wherein the tension section (34) and/or the compression section (35) of each V-belt component (11) is a matrix rubber layer in which fibres extending transversely of the belt are embedded, the fibres preferably being made of cotton, rayon, polyamide or polyester.

7. An endless belt according to any preceding Claim, wherein the cords (17) of the cord fabric layers (13) are made of cotton fibres, rayon fibres, polyamide fibres or polyester fibres.

8. An endless belt according to any preceding Claim, wherein the elastomeric material (15, 16) in which the cords (17) of the cord fibre layers (13) are embedded and/or the elastomeric material of said interposed layer or layers (14) is natural rubber, styrene butadiene rubber, polychloroprene rubber, nitrile butadient rubber, or a blend thereof.

9. An endless belt according to any preceding claim, wherein the elastomeric material (15, 16) in which the cords (17) of the cord fibre layers (13) are embedded is the same as the elastomeric material of said interposed layer or layers (14).

10. An endless belt according to any preceding Claim, wherein a groove (22) is formed in the tie band (12) between each adjacent pair of V-belt components (11) to form an air gap for the reception with clearance of a respective part of an outer periphery of a pulley in use.

11. An endless belt according to Claim 2, wherein portions of the tension section (34A) of each V-belt component (11A) adjacent the tie band (12A) are cut away to form an air gap (22A) between adjacent V-belt components for the reception with clearance of a respective part of an outer periphery of a pulley in use.

12. An endless belt according to Claim 2, wherein the V-belt components (11) are so shaped that their outermost points of contact with a pulley in use are disposed radially outwardly of the belt (10) with respect to cords which form the neutral axis sections (36) of the V-belt components.

## Patentansprüche

1. Endlostreibriemen mit mehreren in gegenseitigen Abständen quer zur Erstreckung des Riemens angeordneten Keilriemen und einem die Keilriemen zu einem einstückigen Gebilde miteinander verbindenden Deckband aus mehreren jeweils unter Zwischenlage einer Schicht aus elastomerem Material übereinander gelegten Kordlagen aus Fäden, welche relativ zueinander in einem Winkel zwischen 95° und 155° sowie außerdem in bezug auf die Erstreckungsrichtung des Riemens geneigt angeordnet sind, dadurch gekennzeichnet, daß die Fäden (17) in jeder Kordlage (13) parallel und nur in einer einzigen Ausrichtung angeordnet sind.

2. Endlostreibriemen nach Anspruch 1, dadurch gekennzeichnet, daß jeder Keilriemen (11) im Querschnitt im wesentlichen trapezförmig ist und einen Zugbereich (34) einen Druckbereich (35) und einen zwischen dem Zug- und dem Druckbereich liegenden Neutralachsenbereich (36) aufweist und daß die Keilriemen mit ihren Zugbereichen (34) stoffschlüssig mit dem Deckband (12) verbunden sind.

3. Endlostreibriemen nach Anspruch 2, dadurch gekennzeichnet, daß die gesamte Außenfläche jedes Keilriemens (11) mit einer Stofflage (40) überzogen ist und daß das Deckband (12) stoffschlüssig mit die Zugbereich (34) der Keilriemen (11) überdeckenden Teilen der Stofflage (40) verbunden ist.

4. Endlostreibriemen nach Anspruch 2, dadurch gekennzeichnet, daß die Keilriemen (11A) ungeschützte Flanken und nur an der im Gebrauch die radial innere Fläche des Treibriemens darstellenden Seite eine Stofflage (40A) aufweisen und daß das Deckband (12A) direkt mit den Zugbereichen (34A) der Keilriemen (11A) stoffschlüssig verbunden ist.

5. Endlostreibriemen nach einem der Ansprüche 2, 3 oder 4, dadurch gekennzeichnet, daß jeder Keilriemen (11) als Zahnriemen ausgebildet ist und eine Reihe von quer zur Erstreckung des Riemens verlaufenden Einschnitten in seinem Druckbereich (35) hat.

6. Endlostreibriemen nach einem der Ansprüche 2 bis 5, dadurch gekennzeichnet, daß der Zugbereich (34) und/oder der Druckbereich (35) jedes Keilriemens (11) eine Gummimatrix aufweist, in welcher sich quer zum Riemen erstreckende Fasern vorzugsweise aus Baumwolle, Rayon, Polyamid oder Polyester eingebettet sind.

7. Endlostreibriemen nach einem der vorstehenden Ansprüche, dadurch gekennzeichnet, daß die Fäden (17) der Kordlagen (13) aus Baumwollfasern, Rayonfasern, Polyamidfasern oder Polyesterfasern sind.

8. Endlostreibriemen nach einem der vorstehenden Ansprüche, dadurch gekennzeichnet, daß das elastomere Material (15, 16), in welchem die Fäden (17) der Kordlagen (13) eingebettet sind, und/oder das elastomere Material der Zwischenschicht oder -schichten (14) Naturkautschuk, Styrol-Butadiengummi, Polychloroprengummi, Nitril-Butadiengummi oder ein Gemisch davon ist.

9. Endlostreibriemen nach einem der vorstehenden Ansprüche, dadurch gekennzeichnet, daß das elastomere Material, in welchem die Fäden (17) der Kordlagen (13) eingebettet sind, das gleiche ist wie das elastomere Material der Zwischenschicht oder -schichten (14).

10. Endlostreibriemen nach einem der vorstehenden Ansprüche, dadurch gekennzeichnet, daß zwischen benachbarten Keilriemen (11) jedes Paares derselben eine Nut (22) im Deckband (12) geformt ist, welche einen Luftspalt für die Aufnahme eines entsprechenden Teils des äußeren Umfangs einer Riemenscheibe mit einem gewissen Spiel im Betrieb bildet.

11. Endlostreibriemen nach Anspruch 2, dadurch gekennzeichnet, daß dem Deckband (12A) benachbarte Teile des Zugbereichs (34A) jedes Keilriemens (11A) weggeschnitten sind, um zwischen benachbarten Keilriemen einen Luftspalt (22A) für die Aufnahme eines entsprechenden Teils des äußeren Umfangs einer Riemenscheibe mit einem gewissen Spiel im Betrieb zu bilden.

12. Endlostreibriemen nach Anspruch 2, dadurch gekennzeichnet, daß die Keilriemen (11) so geformt sind, daß ihre am weitesten außen liegenden Berührungsstellen mit einer Riemenscheibe im Betrieb in bezug auf die Neutralachsenbereich (36) der Keilriemen bildende Fäden radial außerhalb des Riemens (10) verlaufen.

**Revendications**

1. Courroie sans fin de transmission d'énergie comprenant plusieurs éléments trapézoïdaux espacés latéralement par rapport à la direction longitudinale de la courroie et une bande de liaison reliant les éléments trapézoïdaux les uns aux autres afin qu'ils forment une structure unitaire, la bande de liaison étant composée de plusieurs couches d'étoffe formée par des cordons, placées les unes sur les autres, une couche de matière élastomère étant placée entre les couches de chaque paire de couches adjacentes d'étoffe, les couches d'étoffe comprenant des cordons qui sont inclinés mutuellement suivant un angle compris entre 95° et 155°, et sont aussi inclinés par rapport à la direction longitudinale de la courroie, caractérisée en ce que, dans chaque couche (13) d'étoffe formée par des cordons, tous les cordons (17) sont parallèles et ont une seule orientation.

2. Courroie sans fin selon la revendication 1, caractérisée en ce que chaque élément trapézoïdal (11) a une section de forme générale trapézoïdale et comporte un tronçon en tension (34), un tronçon en compression (35) et un tronçon d'axe neutre (36) placé entre les tronçon en tension et en compression, les éléments trapézoïdaux étant liés à la bande de liaison (12) par leurs tronçon en tension (34).

3. Courroie sans fin selon la revendication 2, caractérisée en ce que la totalité de la surface externe de chaque élément trapézoïdal (11) est recouverte par un revêtement d'étoffe (40), et la bande de liaison (12) est reliée aux parties du revêtement d'étoffe (40) qui recouvrent les tronçons en tension (34) des éléments trapézoïdaux (11).

4. Courroie sans fin selon la revendication 2, caractérisée en ce que chaque élément trapézoïdal (11A) est du type à bord brut ayant un revêtement d'étoffe (40A) uniquement sur une surface qui forme une surface radialement interne de la courroie lors du fonctionnement, et la bande de liaison (12A) est directement liée au tronçon en tension (34A) des éléments trapézoïdaux (11A).

5. Courroie sans fin selon l'une quelconque des revendications 2, 3 et 4, caractérisée en ce que chaque élément trapézoïdal (11) est du type cranté ayant une série de gorges dans son tronçon en compression (35), en direction transversale à la direction longitudinale de la courroie.

6. Courroie sans fin selon l'une quelconque des revendications 2 à 5, caractérisée en ce que le tronçon en tension (34) et/ou le tronçon en compression (35) de chaque élément trapézoïdal (11) sont une couche de caoutchouc formant liant dans laquelle des fibres disposées transversalement à la courroie sont enrobées, les fibres étant avantageusement formées de coton, de rayonne, de polyamide ou de polyester.

7. Courroie sans fin selon l'une quelconque des revendications précédentes, caractérisée en ce que les cordons (17) des couches (13) d'étoffe formée par des cordons sont constitués de fibres de coton, de fibres de rayonne, de fibres de polyamide ou de fibres de polyester.

8. Courroie sans fin selon l'une quelconque des revendications précédentes, caractérisée en ce que la matière élastomère (15, 16) dans laquelle les cordons (17) des couches (13) sont enrobés et/ou la matière élastomère de la ou des couches intermédiaires (14) sont le caoutchouc naturel, le caoutchouc de butadiène-styrène, le caoutchouc de polychloroprène, le caoutchouc de butadiène et de nitrile, ou un de leurs mélanges.

9. Courroie sans fin selon l'une quelconque des revendications précédentes, caractérisée en ce que la matière élastomère (15, 16) dans laquelle les cordons (17) des couches (13) sont enrobés est la même que la matière élastomère de la ou des couches intermédiaires (14).

10. Courroie sans fin selon l'une quelconque des revendications précédentes, caractérisée en ce qu'une gorge (22) est formée dans la bande de liaison (12) entre les éléments trapézoïdaux (11) de chaque paire d'éléments adjacents afin qu'elle forme un espace pour le logement avec du jeu d'une partie correspondante d'une périphérie externe d'une poulie en cours de fonctionnement.

11. Courroie sans fin selon la revendication 2, caractérisée en ce que des parties du tronçon en tension (34A) de chaque élément trapézoïdal (11A) adjacent à la bande de liaison (12A) sont découpées afin qu'elles forment un espace (22A) entre les éléments trapézoïdaux adjacents, pour le logement avec du jeu d'une partie correspondante d'une périphérie externe d'une poulie, en cours de fonctionnement.

12. Courroie sans fin selon la revendication 2, caractérisée en ce que les éléments trapézoïdaux (11) ont une configuration telle que leurs points externes de contact avec une poulie, en cours de fonctionnement, sont disposés vers l'extérieur de la courroie (10) en direction radiale, par rapport aux cordons qui forment les tronçons d'axe neutre (36) des éléments trapézoïdaux.

## FIG. 1

## FIG. 2

## FIG. 3

## FIG. 4